(19) Europäisches Patentamt
European Patent Office
Office européen des brevets

(11) Publication number: 0 135 218
B1

(12) **EUROPEAN PATENT SPECIFICATION**

(45) Date of publication of patent specification: **23.09.87**

(51) Int. Cl.$^4$: **C 08 L 77/00**

(21) Application number: **84201075.3**

(22) Date of filing: **19.07.84**

# (54) Impact resistant polyamide composition.

(30) Priority: **20.07.83 NL 8302602**

(43) Date of publication of application:
**27.03.85 Bulletin 85/13**

(45) Publication of the grant of the patent:
**23.09.87 Bulletin 87/39**

(84) Designated Contracting States:
**BE CH DE FR GB IT LI NL SE**

(56) References cited:
**EP-A-0 034 704**
**GB-A-1 552 352**

(73) Proprietor: **STAMICARBON B.V.**
**Mijnweg 1**
**NL-6167 AC Geleen (NL)**

(72) Inventor: **van Asperen, Pieter Jan**
**Boerhaavestraat 21**
**NL-6164 GP Geleen (NL)**
Inventor: **Vroomans, Hubertus Johannes**
**Spaanse Singel 18**
**NL-6191 GK Beek (L.) (NL)**

(74) Representative: **Hoogstraten, Willem Cornelis Roeland et al**
**OCTROOIBUREAU DSM Postbus 9**
**NL-6160 MA Geleen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 135 218 B1

**Description**

The invention relates to an impact resistant polymer composition based on a polyamide and an ethylene-propylene rubber modified with carboxyl groups.

From GB—A—1,552,352 it is known that polyamides such as Nylon 6 and Nylon 66 can be made impact resistant by the addition of a quantity of rubber, particularly an ethylene-propylene rubber modified with carboxyl groups. Though a reasonable impact resistance can be obtained in this manner, the combination of impact resistance and dimensional stability under heat is not satisfactory.

The object of the invention is to provide a highly impact resistant polyamide composition which also has a good dimensional stability under heat.

The invention is characterized in that the polymer composition consists of 50—99 parts by weight polyamide consisting of units having the formula

$$(CO—C_4H_8—CO—NH—C_4H_8—NH)$$

and optionally up to 20% by weight of comonomers and 1—50 parts by weight ethylene-propylene rubber treated with an ethylenically unsaturated compound containing one or more carboxyl groups, or its anhydride or semi-ester.

The polymer composition according to the invention preferably consists of 2.5—20 parts by weight rubber modified with carboxyl groups and 80—97.5 parts by weight polyamide.

Surprisingly it has been found that the polymer composition according to the invention possesses superior mechanical properties compared to compositions of other polyamides and carboxylated rubbers. So the polymer composition according to the invention combines a very good dimensional stability under heat with a very high impact resistance while other properties as creep at high temperatures, wear, as measured by the TABOR test, environmental stress cracking resistance and thermal stability of the unstabilized composition remain on the same level or show improvement over compositions that contain other polyamides, such as nylon 6,6 and nylon 6, and carboxylated rubbers.

The polyamide to be applied according to the invention, also referred to as nylon 4, 6, is known per se. In 'Journal of Polymer Science', Vol. 15 (1977) pp. 537—545 it is known that nylon 4, 6 can be prepared from adipic acid and 1,4-diaminobutane. In addition, a few other processes for preparing nylon 4,6 are described in NL—A—8001763 and 8001764.

For the polymer composition according to the invention preference is given to applying a nylon 4,6 polymer with a relative viscosity ($\eta_{rel}$, measured in respect of a solution of 1 g polymer in 100 ml 96% (wt) sulphuric acid, at 20°C) of at least 2.5, more specifically between 3.0 and 5.0.

Generally preference is given to the homopolymer, but it is possible also to use a copolymer with up to 20% by weight comonomers, such as lactam, more specifically caprolactam.

The ethylene-propylene-rubbers are preferably chosen from the group of ethylene-propylene-diene rubbers. In the ethylene-propylene-diene rubber the diene used is preferably one or more non-conjugated dienes having 6—12 carbon atoms. The quantity of dienes may range from 0.01—5.0 moles % in respect of the rubber, but is preferably between 0.5 and 3.5 moles %. The dienes most preferred are of such a structure that only one double bond is incorporated in the polymer and that the other is freely available for the possible conversion with the unsaturated carboxylic acid. Double well incorporated bonds are terminal undisturbed double bonds or double bonds in a strained ring system such as, for instance, in a norbornene ring. The double bond that is not incorporated may originate from a non-strained ring system (e.g. dicyclopentadiene), from an alkylidene group (e.g. ethylidenenorbornene) or and preferably from an alkenyl group and in this last-mentioned case it is consequently not bonded direct in or to a ring system. Examples of such compounds are 2-propenyl norbornene, 2-butenyl norbornene, 1,5-heptadiene and 1,4 hexadiene.

The best results are achieved if the number-average molecular weight of the rubbery copolymer is between 50,000 and 200,000.

The unsaturated carboxylic acid is preferably polybasic and is used as acid, anhydride or semi-ester. Examples are: maleic acid, fumaric acid, itaconic acid, maleic anhydride, monoethyl ester of fumaric acid and the monomethyl ester of maleic acid. In addition to the unsaturated carboxylic acid with which the rubber or the mixture is converted, minor quantities of other monomers may be present. These quantities will preferably remain below 25% (wt), particularly below 10% (wt), in respect of the ethylene-propylene-diene rubber. If a polybasic unsaturated carboxylic acid is chosen, preferably only a minor quantity of a monobasic unsaturated carboxylic acid or other vinyl monomer is present. This quantity is at most 25% (wt), particularly 10% (wt). The use of the unsaturated carboxylic acid without other unsaturated monomers being present is preferred most.

For the conversion of the rubbery copolymer with the unsaturated carboxylic acid the usual processes can be applied. These are performed in suspension, in solution or in mass. The conversion can, furthermore, be carried out by addition of a radical-supplying agent, such as a peroxide or a hydroperoxide, or by radiation. However, a thermal conversion in mass, which can take place under dynamic as well as static conditions, is preferred most. In small-scale operation preference is given to the static conditions if powdery raw materials can be started from. These can then be mixed at room temperature in a simple

manner in any proportion and can subsequently by introduced for conversion into a reaction chamber to be closed. In large-scale preparation, preference is given to the dynamic conditions. In view of the viscosity of the polymeric raw materials, dynamic mixing of the carboxylic acid and/or derivatives with the rubbery copolymer requires high temperatures and, as a consequence, high pressures. These conditions can be reached in an extruder or internal mixer.

In the thermal conversion in mass the polymeric raw materials show a strong tendency both to cross-link and to degrade. By choosing the polymeric raw materials correctly and adjusting the conversion conditions, it is possible for the molecular changes of the polymeric raw materials to remain within the desired limits while retaining a sufficiently high degree of conversion. It may be an advantage, for instance for the purpose of improving the processability, to permit some degradation. This is achieved by appling a higher conversion temperature. The conversion preferably takes place under inert conditions, i.e. in the absence of oxygen.

For the conversion with the unsaturated carboxylic acid thereof, unsaturation in the polymeric raw materials is not necessary. The conversion can be promoted by it, resulting in higher yields. The conversion temperature, too, is important, it should preferably be between 180 and 400°C; particularly between 250 and 350°C. Accordingly as the temperature is higher, a shorter conversion period will suffice. The conversion periods are generally between 0.5 and 60 minutes. If optimum values for the toughness at low temperatures are to be reached, the conversion is carried out between 250 and 300°C for 2 to 60 minutes.

After the conversion, a polymer-linked acid, anhydride or semi-ester is obtained, depending on the structure of the carboxylic acid applied. In the conversion preference is given to choosing the anhydride form. The modified rubber preferably contains 0.01—5.0, more specifically 0.5—5.0% (wt) of the ethylenic compound containing or capable of supplying one or more carboxylic acids.

In view of the properties, preference is given to the use of maleic anhydride.

The moulding compound according to the invention can be obtained in a manner known per se by mixing the various components, e.g. by mixing the components at a temperature between 150°C and 300°C in a batch kneader or a continuous mixer and kneader, such as single or double-screw extruders.

The polymer composition may, moreover, contain various additives, such as pigments, fillers, stabilizers, antioxidants, lubricants, antistatics, flame retarders, any other synthetic materials and the like.

The invention is elucidated by means of the following example.

Example and comparative examples

In a 30-millimetre Werner and Pfleiderer double-screw extruder the following nylons are mixed with a 1.0% maleic anhydride-containing ethylene-propylene-diene rubber (Keltan® 320) in a proportion of 100 parts nylon and 15 parts rubber. The rubbers have been incorporated not far above the melting points of the various nylons, for nylon 4,6, nylon 6 and nylon 6,6 at resp. 300°C; 240°C and 265°C. The compounds have been granulated and, after drying, injection-moulded on a 50 mm Stork Reed injection moulding machine to form test sheets of 10 cm×10 cm×3.2 mm. The temperature of the mould in this process was 80°C.

The properties measured on freshly prepared dry materials are resp.

| | N4.6 | N6 | N6.6 |
|---|---|---|---|
| | | (comparative) | |
| Izod+23°C KJ/$m^2$ | 70 | 50 | 50 |
| Izod−20°C KJ/$m^2$ | 20 | 16 | 16 |
| Izod−40°C KJ/$m^2$ | 15 | 10 | 10 |

Izod measured according to ISO R 180.

| | N4.6 | N6 | N6.6 |
|---|---|---|---|
| | | (Comparative) | |
| Heat distortion temperature (°C) dry | 95 | 75 | 80 |

Heat Distortion Temperature measured according to ISO R 75 B (1.82 Pa).

**Claims**

1. Impact resistant polymer composition based on a polyamide and an ethylene-propylene rubber modified with carboxyl groups, characterized in that the polymer composition consists of 50—99 parts by weight polyamide consisting of units having the formula

$$(CO—C_4H_8—CO—NHC_4H_8—NH)$$

and optionally up to 20% by weight of comonomers, and 1—50 parts by weight ethylene-propylene rubber treated with an ethylenically unsaturated compound containing one or more carboxyl groups, or its anhydride or semi-ester.

2. Polymer composition according to claim 1, characterized in that the polymer composition consists of 2.5—20 parts by weight modified ethylene-propylene rubber and 80—97.5 parts by weight polyamide.

3. Polymer composition according to claim 1 or 2, characterized in that the ethylene-propylene rubber is an ethylene-propylene-diene rubber.

4. Polymer composition according to any one of the claims 1—3, characterized in that the ethylenically unsaturated compound used is maleic anhydride.

5. Polymer composition according to any one of claims 1—4, characterized in that the modified rubber contains 0.5—5% (wt) ethylenically unsaturated compound.

**Patentansprüche**

1. Schlagzähe Polymerzusammensetzung auf der Basis eines Polyamids und eines mit Carboxylgruppen modifizierten Ethylen-Propylen-Kautschuks, dadurch gekennzeichnet, daß die Polymerzusammensetzung aus 50—99 Gew.-Teilen Polyamid, bestehend aus Einheiten der Formel

$$(CO—C_4H_8—CO—NH—C_4H_8—NH)$$

und gegebenenfalls bis zu 20 Gew.-% Comonomeren, und 1—50 Gew.-Teilen Ethylen-Propylen-Kautschuk, der mit einer eine oder mehrere Carboxylgruppen enthaltenden ethylenisch ungesättigten Säure oder deren Anhydrid oder Halbester behandelt worden war, besteht.

2. Polymerzusammensetzung nach Anspruch 1, dadurch gekennzeichnet, daß die Polymerzusammensetzung aus 2,5—20 Gew.-Teilen modifiziertem Ethylen-Propylen-Kautschuk und 80—97,5 Gew.-Teilen Polyamid besteht.

3. Polymerzusammensetzung nach Anspruch 1 oder 2, dadurch gekennzeichnet, daß der Ethylen-Propylen-Kautschuk ein Ethylen-Propylen-Dienkautschuk ist.

4. Polymerzusammensetzung nach einem der Ansprüche 1—3, dadurch gekennzeichnet, daß die verwendete ethylenisch ungesättigte Verbindung Maleinsäureanhydrid ist.

5. Polymerzusammensetzung nach einem der Ansprüche 1—4, dadurch gekennzeichnet, daß der modifizierte Kautschuk 0,5—5% (Gew.) an ethylenisch ungesättigter Verbindung enthält.

**Revendications**

1. Composition polymère résistant aux chocs à base d'un polyamide et d'un caoutchouc éthylène/propylène modifié par des groupes carboxyle, caractérisée en ce que la composition polymère comprend 50 à 99 parties en poids d'un polyamide consistant en motifs de formule:

$$(CO—C_4H_8—CO—NH—C_4H_8—NH)$$

et facultativement jusqu'à 20% en poids de comonomères, et de 1 à 50 parties en poids d'un caoutchouc éthylène/propylène traité par un composé à insaturation éthylénique contenant un ou plusieurs groupes carboxyle ou son anhydride ou semi-ester.

2. Composition polymère selon la revendication 1, caractérisée en ce que la composition polymère comprend de 2,5 à 20 parties en poids d'un caoutchouc éthylène/propylène modifié et 80 à 97,5 parties en poids de polyamide.

3. Composition polymère selon la revendication 1 ou 2, caractérisée en ce que le caoutchouc éthylène/propylène est un caoutchouc éthylène/propylène/diène.

4. Composition polymère selon l'une quelconque des revendications 1 à 3, caractérisée en ce que le composé utilisé à insaturation éthylénique est l'anhydride maléique.

5. Composition polymère selon l'une quelconque des revendications 1 à 4, caractérisée en ce que le caoutchouc modifié contient 0,5 à 5% en poids d'un composé à insaturation éthylénique.